# EUROPÄISCHE PATENTSCHRIFT

(11) **EP 2 186 588 B1**
(45) Veröffentlichungstag und Bekanntmachung des Hinweises auf die Patenterteilung: **07.01.2015**
(21) Anmeldenummer: 09013856.1
(22) Anmeldetag: 04.11.2009
(51) Int. Cl.: B23D 45/04, B23D 47/02

(54) **Kapp- und Gehrungssäge**
Chop and mitre-box saw
Scie circulaire et scie à onglet

(30) Priorität: 12.11.2008 DE 202008015018 U
(43) Veröffentlichungstag der Anmeldung: 19.05.2010
(73) Patentinhaber: Metabowerke GmbH, 72622 Nürtingen (DE)
(72) Erfinder: Moormann, Christoph, 49716 Mappen (DE)
(74) Vertreter: Lorenz, Markus

(56) Entgegenhaltungen:
- EP-A2- 1 902 802
- DE-U1-202006 012 601
- GB-A- 2 446 317
- US-A1- 2004 079 214

## Beschreibung

Die Erfindung betrifft eine Kapp- und Gehrungssäge mit den Merkmalen des Oberbegriffs von Anspruch 1.

Die bekannte Kapp- und Gehrungssäge, von der die Erfindung ausgeht (GB-A-2 446 317), weist einen Träger auf, mit dem sie auf einer Unterlage, beispielsweise einer Werkbank steht. Bei dieser Kapp- und Gehrungssäge bildet der Träger selbst randseitig seitliche Auflageflächen. In den Träger ist ein um eine Hochachse drehbar gelagerter Drehtisch eingelassen. Zusammen mit den seitlichen Auflageflächen bildet dieser Drehtisch eine Werkstückauflagefläche. Mittig weist die Werkstückauflagefläche im Bereich des Drehtisches einen Eintauchschlitz für den Zahnkranz eines Sägeblattes auf.

Es gibt auch Varianten dieser Kapp- und Gehrungssäge, bei denen der Träger seitlich des Drehtisches auf ein kleines Stück reduziert ist und nur eine geringe oder gar keine Auflagefläche bildet.

Bei der bekannten, zuvor erläuterten Kapp- und Gehrungssäge befindet sich am Drehtisch, der einen Teil des Trägers bildet, eine Halterung für ein Sägeaggregat, das oberhalb der Werkstückauflagefläche angeordnet ist und einen Antriebsmotor sowie ein davon angetriebenes Sägeblatt aufweist. Dieses Sägeaggregat definiert mit der Ebene des Sägeblattes eine Sägeschnittrichtung. Diese findet sich in der Ausrichtung des Eintauchschlitzes in der Werkstückauflagefläche wieder.

Das Sägeaggregat kann an der Halterung um eine Querachse geschwenkt werden, und zwar aus einer angehobenen Ruhestellung in eine abgesenkte Sägestellung und umgekehrt. Mit dieser Bewegung des Sägeblattes kann ein auf der Werkstückauflagefläche befindliches Werkstück abgeschnitten - gekappt - werden.

Zur Fixierung des Werkstückes auf der Werkstückauflageflüche dient ein Werkstückanschlag, der sich in der mittigen Grundstellung des Sägeaggregates bzw. des Drehtisches rechtwinklig bezüglich der Ebene des Sägeblattes, also quer zur Sägeschnittrichtung, in dieser Position des Sägeaggregates erstreckt. Damit ist es möglich, das Werkstück "gegen" den Werkstückanschlag zu sägen.

Bei der bekannten, zuvor erläuterten Kapp- und Gehrungssäge ist die Schnittlänge dadurch größer als durch den Durchmesser des Sägeblattes vorgegeben, daß zusätzlich eine Zugfunktion realisiert ist. Das Sägeblatt kann hier das Werkstück nicht nur infolge der Schwenkbewegung um die Querachse durchtrennen, sondern zusätzlich auch infolge einer Verschiebebewegung senkrecht zur Querachse und parallel zur Werkstückauflagefläche. Die bekannte Kapp- und Gehrungssäge ist somit eine kombinierte Kapp-, Gehrungs- und Zugsäge. Sie zeichnet sich weiter dadurch aus, daß der Drehtisch einen kleinen Durchmesser hat, jedoch einen Auslegerarm mit darin fortgesetztem Eintauchschlitz aufweist.

Die Lehre der Erfindung läßt sich bei einer Kapp- und Gehrungssäge mit einem Drehtisch mit Auslegerarm ebenso verwirklichen wie bei einer Kapp- und Grehrungssäge mit einem Drehtisch ohne Auslegerarm (DE-A-29 29 932) sowie bei einer Kapp- und Gehrungssäge in Form einer Radialarmsäge ohne oder mit Höhenverstellung (US-A-4,152,961).

Bei Kapp- und Gehrungssägen der in Rede stehenden Art weist die Werkstückauflagefläche in Sägeschnittrichtung, definiert bei in der mittigen Grundstellung befindlichem Sägeaggregat, eine bestimmte Tiefe und quer zur Sägeschnittrichtung in dieser Position des Sägeaggregates eine bestimmte Breite auf. Das Werkstück kann aber in seinen Abmessungen durchaus wesentlich größer als die Werkstückauflagefläche, insbesondere wesentlich breiter oder wesentlich tiefer sein. In diesem Fall liegt das Werkstück nicht optimal auf, der Sägeschnitt im Werkstück kann nicht so präzise ausgeführt werden, wie man sich das eigentlich wünscht.

In Erkennung des zuvor erläuterten Problems ist bei der bekannten Kapp- und Gehrungssäge, von der die Erfindung ausgeht, am Träger zumindest an einer Seite, tatsächlich aber an der linken und an der rechten Querseite, jeweils ein eine Zusatzfläche bildender Zusatzträger angebracht, durch den die für die Unterstützung eines Werkstückes wirksame Breite der Werkstückauflagefläche vergrößerbar ist. Dort ist vorgesehen, daß die Zusatzfläche des am Träger angebrachten Zusatzträgers gegenüber dem Träger zwischen einer dem Träger nahen Grundposition und einer vom Träger weitestmöglich entfernten Distanzposition verstellbar, nämlich mittels einer Stangen-Verschiebeführung verschiebbar ist. Die beiden Zusatzhäger sind mittels der Stangen-Verschiebeführungen quer zur Sägeschnittrichtung verschiebbar. An den beiden Zusatzträgern findet sich jeweils wieder ein weiterer Zusatzträger, der rechtwinklig dazu, also in Sägeschnittrichtung, mittels einer Stangen-Verschiebeführung verschiebbar ist. Dadurch ist auch die für die Unterstützung des Werkstücks wirksame Tiefe der Werkstückauflagefläche seitlich außen vergrößerbar.

Bei den bekannten Kapp- und Gehrungssägen ist die Unterstützung eines sehr großen Werkstückes noch immer nicht optimal. Deshalb liegt der Lehre das Problem zugrunde, die bekannte, eingangs erläuterte Kapp- und Gehrungssäge hinsichtlich der Präzision von Sägeschnitten in besonders großen Werkstücken weiter zu verbessern.

Das zuvor aufgezeigte Problem ist bei einer Kapp- und Gehrungssäge mit den Merkmalen des Oberbegriffs von Anspruch 1 durch die Merkmale des kennzeichnenden Teils von Anspruch 1 gelöst.

Auch bei der erfindungsgemäßen Kapp- und Gehrungssäge ist die Zusatzfläche des am Träger angebrachten Zusatzträgers gegenüber dem Träger zwischen einer dem Träger nahen Grundposition und einer vom Träger weitestmöglich entfernten Distanzposition verstellbar. Anders als bei allen im Stand der Technik verwirklichten Kapp- und Gehrungssägen, bei denen die Zusatzfläche am Zusatzträger auch in der Grundposition praktisch vollständig vor der vom Werkstückanschlag definierten Querlinie liegt, befindet sich bei der erfindungsgemäßen Kapp- und Gehrungssäge die Zusatzfläche in der Grundposition zumindest zu einem erheblichen Teil hinter der Querlinie. In der Grundposition ist also ein erheblicher Teil der Zusatzfläche für die Unterstützung des Werkstücks ungenutzt. In der Grundposition werden aber auch regelmäßig nur Werkstücke mit entsprechend passenden, geringen Abmessungen bearbeitet.

Wird ein Werkstück mit einer großen Abmessung, insbesondere einer erheblichen Tiefe und Breite bearbeitet, so wird der Zusatzträger mit der Zusatzfläche in die Distanzposition oder eine zwischen Grundposition und Distanzposition befindliche Position verstellt. Damit kommt der in der Grundposition nicht genutzte Teil der Zusatzfläche in den Bereich vor der vom Werkstückanschlag definierten Querlinie. Diese Zusatzfläche wirkt hier an der Unterstützung des Werkstückes, das am Werkstückanschlag angelegt ist, mit.

Erfindungsgemäß wird damit ein großes Werkstück wesentlich besser, nämlich mit einer größeren Zusatzfläche unterstützt als bisher. Die Zusatzfläche am Zusatzträger wandert bei Bewegung aus der Grundposition in die Distanzposition genau dahin, wo sie bei einem breiten und tiefen Werkstück benötigt wird.

Bevorzugt bedeutet ein "erheblicher Teil" der Zusatzfläche mindestes 25 %, vorzugsweise 30 % bis 50 %, der gesamten Zusatzfläche.

In Anpassung an die erfindungsgemäße Lösung ist der Zusatzträger derart am Träger angebracht, daß er aus seiner Grundposition durch eine vom Werkstückanschlag weg schräg nach außen und nach vorn gerichtete Bewegung in seine Distanzposition verstellbar ist.

Besonders empfiehlt es sich dabei, bei der erfindungsgemäßen Kapp- und Gehrungssäge den Zusatzträger nicht an der Vorderseite, sondern an der Querseite des Trägers anzubringen und die Bewegung relativ zur Querseite des Trägers vorzusehen.

Sieht man, wie beim Stand der Technik aus der EP-A-1 902 802, jedoch den Zusatzträger an der Vorderseite des Trägers vor, so läßt sich der erfindungsgemäße Erfolg beispielsweise mit einer i. w. L-förmig ausgestalteten Zusatzfläche des Zusatzträger erreichen, die dabei in Grundposition mit einem L-Schenkel bis hinter die Querlinie reicht. Entsprechendes gilt auch bei einem an der Vorderseite des Trägers angebrachten, jedoch nicht schräg, sondern parallel zur Sägeschnittrichtung nach vorn herausziehbaren Zusatzträger.

Eine Alternative zu einer Stangen-Verschiebeführung ist eine Schwenkführung (DE-U-20 2006 012 601) oder eine Parallelogramm-Schwenkführung.

Im folgenden wird die Erfindung anhand einer lediglich bevorzugte Ausführungsbeispiele darstellenden Zeichnungen näher erläutert. In der Zeichnung zeigt
- Fig. 1: in perspektivischer Ansicht eine typische Kapp- und Gehrungssäge,
- Fig. 2: in Draufsicht eine erfindungsgemäße Kapp- und Gehrungssäge mit seitlichen Zusatzträgern in Grundposition,
- Fig. 3: in Draufsicht die erfindungsgemäße Kapp- und Gehrungssäge gemäß Fig. 2 mit den Zusatzträgern in Distanzposition,
- Fig. 4: in einer Fig. 2 entsprechenden Darstellung ein weiteres Ausführungsbeispiel einer erfindungsgemäßen Kapp- und Gehrungssäge mit den Zusatzträgern in Grundposition und
- Fig. 5: in einer Fig. 3 entsprechenden Darstellung das weitere Ausführungsbeispiel einer erfindungsgemäßen Kapp- und Gehrungssäge mit den beiden seitlichen Zusatzträgern in Distanzposition.

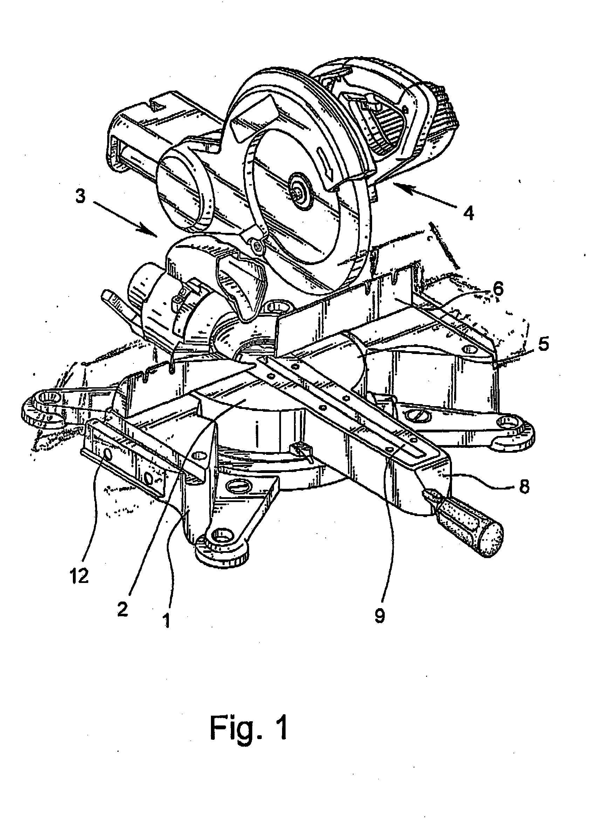

Fig. 1 zeigt den grundsätzlichen Aufbau einer erfindungsgemäßen Kapp- und Gehrungssäge, hier in der Ausführungsform einer kombinierten Kapp-, Gehrungs- und Zugsäge. Die Zugfunktion ist keine zwingende Voraussetzung für die Verwirklichung der Lehre.

Die in Fig. 1 dargestellte Kapp- und Gehrungssäge zeigt einen Träger 1, der eine Werkstückaußageßäche 2 bildet. Am Träger 1 befindet sich eine Halterung 3 für ein oberhalb der Werkstückauflagefläche 2 angeordnetes, eine Sägeschnittrichtung definierendes Sägeaggregat 4.

In der dargestellten, jedoch für die Lehre nicht zwingend notwendigen Konstruktion ist in den Träger 1 ein Drehtisch 5 eingesetzt, der im Träger 1 um eine Hochachse drehbar gelagert ist. Der Träger 1 zusammen mit dem Drehtisch 5 bildet gemeinsam die Werkstückaußageßäche 2.

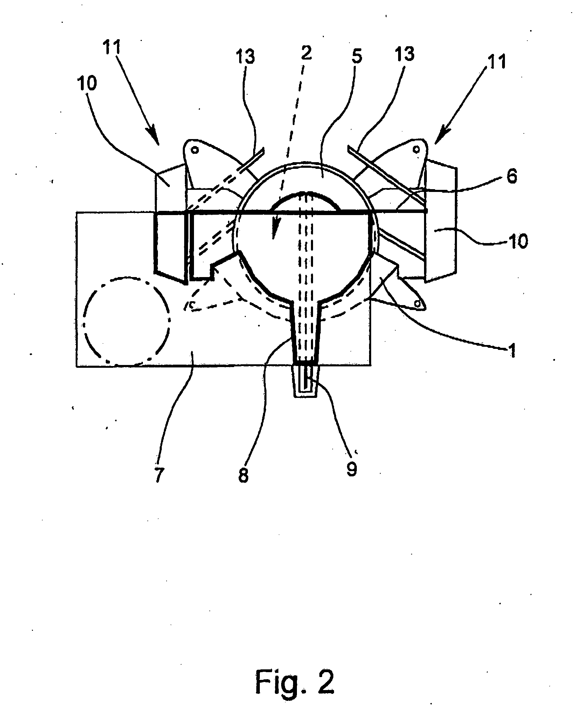

Am Träger 1 angebracht ist ein Werkstückanschlag 6, an dem zum Ausführen eines Sägeschnittes ein Werkstück 7 (Fig. 2-5) angelegt wird. Der Werkstückanschlag 6 verläuft quer zur Sägeschnittrichtung, wenn man diese bei in der mittigen Grundstellung befindlichem Sägeaggregat 4 (Fig. 1) definiert.

Geht man von dem in Grundstellung befindlichen Sägeaggregat 4 aus, so hat die Werkstückauflagefläche 2 in Sägeschnittächtung eine bestimmte Tiefe, eingezeichnet in Fig. 2, und quer zur Sägeschnittrichtung eine bestimmte Breite. Im dargestellten Ausführungsbeispiel wird die Tiefe der Werkstückauflagefläche 2 ohne den Auslegerarm 8 des Drehtisches 5 definiert.

Im hier dargestellten, besonderen Ausführungsbeispiel der Kapp- und Gehrungssäge mit dem eingelassenen Drehtisch 5 wird eine ausreichende Schnittlänge für das hier in Längsrichtung verschiebbare Sägeaggregat 4 durch den Auslegerarm 8 am Drehtisch 5 gewährleistet. Im Drehtisch 5 und Auslegerarm 8 befindet sich ein Eintauchschlitz 9 für den Zahnkranz des Sägeblattes des Sägeaggregats 4. Der Eintauchschlitz 9 definiert ebenfalls die Sägeschnithichtung,

Die Unterstützung des Werkstückes 7 auf der Werkstäckauflagefläche 2 wird nach vorne hin zusätzlich durch den Auslegerarm 8 gewährleistet, aber eben nur in einem schmalen, mittigen Bereich.

Bereits in Fig. 1 kann man erkennen, daß am Träger 1 zumindest an einer Querseite, tatsächlich an beiden Querseiten, ein eine Zusatzfläche 10 bildender Zusatzträger 11 anbringbar ist, durch den die für die Unterstützung eines Werkstückes 7 wirksame Breite vergrößerbar ist. In Fig. 1 erkennt man das an den seitlich angedeuteten Steckfassungen 12, in die Tragstangen 13 eines Zusatzträgers 11 eingesteckt werden können.

Fig. 2 bis 5 zeigen jeweils rechts und links des Trägers 1 entsprechende Zusatzträger 11 mit Zusatzflächen 10 und entsprechenden Tragstangen 13.

Erfindungsgemäß ist nun vorgesehen, daß am Träger 1 zumindest an einer Seite ein eine Zusatzfläche 10 bildender Zusatzträger 11 anbringbar ist, durch den die für die Unterstützung eines Werkstückes 7 wirksame Breite vergrößerbar ist. Die Zusatzflächen 10 des am Träger 1 angebrachten Zusatzträgers 11 ist gegenüber dem Träger 1 zwischen einer dem Träger 1 nahen Grundposition und einer vom Träger 1 weitestmöglich entfernten Distanzposition verstellbar. Die Zusatzfläche 10 liegt in der Grundposition zumindest zu einem erheblichen Teil hinter der vom Werkstückanschlag 6 definierten Querlinie und in der Distanzposition weitestgehend oder komplett vor der Querlinie.

In Fig. 2 befinden sich die rechts und links am Träger 1 angeordneten Zusatzträger 11 mit ihren Zusatzflächen 10 in Grundposition. Man erkennt, daß das große Werkstück 7, durch den strichpunktierten Kreis angedeutet, eine große, nicht unterstützte Fläche hat. Man erkennt ferner, daß sich ein erheblicher Teil der Zusatzflächen 10 der beiden Zusatzträger 11 hinter der vom Werkstückanschlag 6 definierten Querlinie befinden.

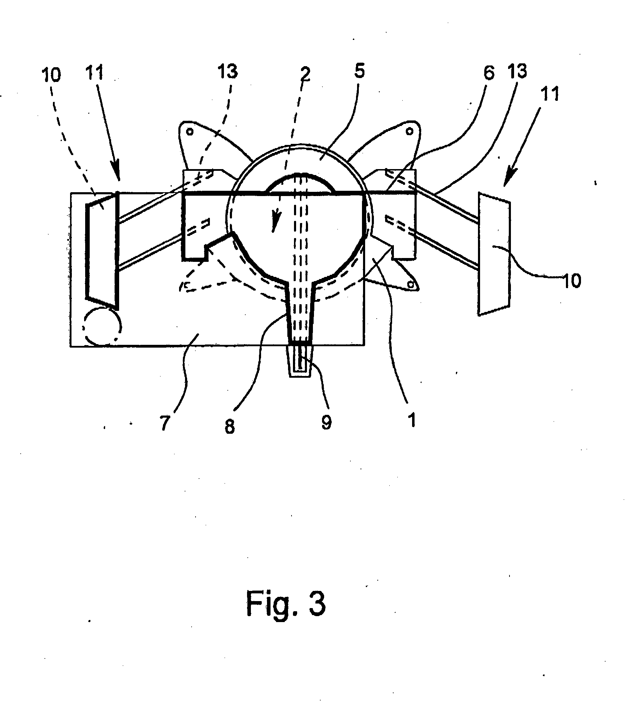

Fig. 3 zeigt die beiden Zusatzträger 11 mit ihren Zusatzflächen 10 in der jeweiligen Distanzposition. Dadurch hat sich die wirksame Breite und Tiefe der Werkstückauflagefläche 2 deutlich vergrößert. Wiederum ist strichpunktiert mit einem Kreis angedeutet, welche Fläche des Werkstückes 7 nicht unterstützt ist. Das ist wesentlich weniger als in Fig. 2.

Das in Fig. 2 und 3 dargestellte Ausführungsbeispiel zeigt, daß der erhebliche Teil der Zusatzfläche 10 mindestens 25 %, vorzugsweise 30 % bis 50 %, der Zusatzfläche 10 beträgt.

Das in Fig. 2 und 3 dargestellte Ausführungsbeispiel zeigt ferner eine besonders zweckmäßige Konstruktion mit einer Stangen-Verschiebefuhrung mit Tragstangen 13 in Steckfassungen 12. Dabei ist vorgesehen, daß der Zusatzträger 11 bzw. hier beide Zusatzträger 11 derart am Träger 1, im dargestellten Ausführungsbeispiel an der Querseite des Trägers 1, angebracht ist, daß er aus der Grundposition durch eine vom Werkstückanschlag 6 weg schräg nach außen und nach vom gerichtete Bewegung in seine Distanzposition verstellbar ist.

Man erkennt beim Vergleich von Fig. 2 und Fig. 3 sehr gut, wie die Zusatzfläche 10 am linken Zusatzträger 11 beim Verschieben in die Distanzposition "aktiviert" wird. Der in Grundposition hinter der Querlinie wirkungslos "geparkte" Teil der Zusatzfläche 10 ist bei in Distanzposition befindlicher Zusatzfläche 10 als zusätzliche Unterstützung des Werkstücks 7, also als Verbreiterung der Werkstückauflagefläche 2 aktiviert worden.

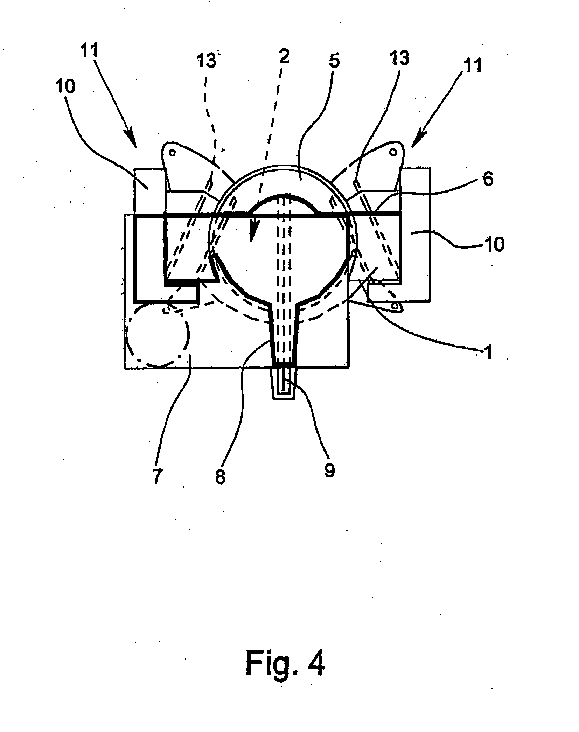

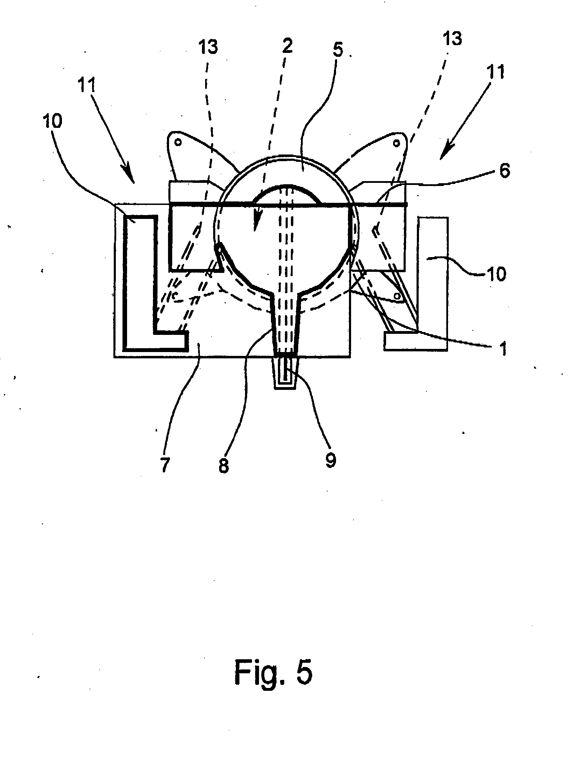

Bei dem in Fig. 4 und 5 dargestellten Ausführungsbeispiel befinden sich die Steckfassungen 12 für die Tragstangen 13 der Zusatzträger 11 nicht an den Querseiten des Trägers 1, sondern an der Vorderseite. Durch die geschickte L-Form der Zusatzflächen 10 der Zusatzträger 11 hat man aber auch hier denselben Effekt des "Aktivierens" in Grundposition nicht genutzter Teile der Zusatzflächen 10. Dadurch wird bei diesem Ausführungsbeispiel beim Verschieben der Zusatzträger 11 in die Distanzposition auch die wirksame Breite der Werkstückauflagefläche 2 perfekt vergrößert.

## Patentansprüche

1. Kapp- und Gehrungssäge
mit einem Träger (1), der eine Werkstückauflagefläche (2) bildet, und einer am Träger (1) angebrachten Halterung (3) für ein oberhalb der Werkstückauflagefläche (2) angeordnetes, eine Sägeschnittrichtung definierendes Sägeaggregat (4), mit einem am Träger (1) angebrachten, in der mittigen Grundstellung des Sägeaggregates (4) auf der Werkstückauflagefläche (2) quer zur Sägeschnittrichtung verlaufenden Werkstückanschlag (6) für ein Werkstück (7),
wobei die Werkstückauflagefläche (2) in Sägeschnittrichtung bei in Grundstellung befindlichem Sägeaggregat (4) eine bestimmte Tiefe und quer zur Sägeschnittrichtung bei in Grundstellung befindlichem Sägeaggregat (4) eine bestimmte Breite aufweist,
wobei am Träger (1) zumindest an einer Seite ein eine Zusatzfläche (10) bildender Zusatzträger (11) angebracht ist, durch den die für die Unterstützung eines Werkstückes (7) wirksame Tiefe und/oder Breite vergrößerbar ist,
wobei die Zusatzfläche (10) des am Träger (1) angebrachten Zusatzträgers (11) gegenüber dem Träger (1) zwischen einer dem Träger (1) nahen Grundposition und einer vom Träger (1) weitestmöglich entfernten Distanzposition verstellbar ist und
wobei die Zusatzfläche (10) in der Grundposition zu einem bestimmten Teil hinter der vom Werkstückanschlag (6) definierten Querlinie liegt,
**dadurch gekennzeichnet,**
**dass** die Zusatzfläche (10) in der Grundposition zu einem erheblichen Teil hinter der vom Werkstückanschlag (6) definierten Querlinie und in der Distanzposition weitestgehend oder komplett vor der Querlinie liegt und
**dass** der Zusatzträger (11) derart am Träger (1), angebracht ist, dass er aus der Grundposition durch eine vom Werkstückanschlag (6) weg schräg nach außen und nach vorn gerichtete Bewegung in seine Distanzposition verstellbar ist.

2. Kapp- und Gehrungssäge nach Anspruch 1, **dadurch gekennzeichnet,**
**dass** der erhebliche Teil der Zusatzfläche (10) mindestens 25 %, vorzugsweise 30 % bis 50 %, der Zusatzfläche (10) beträgt.

3. Kapp- und Gehrungssäge nach Anspruch 1 oder 2, **dadurch gekennzeichnet,**
**dass** der Zusatzträger (10) an der Querseite des Trägers (1) angebracht ist.

4. Kapp- und Gehrungssäge nach einem der Ansprüche 1 bis 3, **dadurch gekennzeichnet,**
**dass** der Zusatzträger (11) am Träger (1) mit Hilfe einer Stangen-Verschiebeführung angebracht ist.

5. Kapp- und Gehrungssäge nach einem der Ansprüche 1 bis 3, **dadurch gekennzeichnet,**
**dass** der Zusatzträger (11) am Träger (1) mit Hilfe einer Schwenkführung, insbesondere einer Parallelogramm-Schwenkführung, angebracht ist.

6. Kapp- und Gehrungssäge nach einem der Ansprüche 1 bis 5, **dadurch gekennzeichnet,**
**dass** der Zusatzträger (11) am Träger (1) abnehmbar angebracht ist.

## Claims

1. Chop and mitre-box saw
with a carrier (1), which forms a workpiece support surface (2), and a mounting (3), which is attached to said carrier (1), for a sawing unit (4) which is arranged above the workpiece support surface (2) and defines a direction of the saw cut, with a workpiece stop (6) for a workpiece (7), which workpiece stop (6) is attached to the carrier (1) and extends transversely to the direction of the saw cut when the sawing unit (4) is in its central basic position on the workpiece support surface (2);
wherein the workpiece support surface (2) has a specific depth in the direction of the saw cut when the sawing unit (4) is located in the basic position, and a specific width, transversely to the direction of the saw cut, when said sawing unit (4) is located in the basic position;
wherein there is attached to the carrier (1), at least on one side, an additional carrier (11) which forms an additional surface (10) and by which the depth and/or width which is effective for supporting a workpiece (7) can be enlarged;
wherein the additional surface (10) of the additional carrier (11) attached to the carrier (1) can be adjusted, in relation to said carrier (1), between a basic position close to said carrier (1) and a distance position which is as far away as possible from said carrier (1); and
wherein the additional surface (10) lies, in the basic position, to a certain extent behind the transverse line defined by the workpiece stop (6);
**characterised in that**
the additional surface (10) lies, in the basic position, to a considerable extent behind the transverse line defined by the workpiece stop (6) and, in the distance position, largely or completely in front of the transverse line,
and
that the additional carrier (11) is attached to the carrier (1) in such a way that it can be adjusted out of the basic position and into its distance position as a result of a movement which is directed obliquely outwards and forwards away from the workpiece stop (6).

2. Chop and mitre-box saw according to Claim 1, **characterised in that**
the considerable extent of the additional surface (10) amounts to at least 25%, and preferably 30% to 50%, of said additional surface (10).

3. Chop and mitre-box saw according to Claim 1 or 2, **characterised in that**
the additional carrier (10) is attached on the transverse side of the carrier (1).

4. Chop and mitre-box saw according to one of Claims 1 to 3, **characterised in that**
the additional carrier (11) is attached to the carrier (1) with the aid of a rod-type sliding guide.

5. Chop and mitre-box saw according to one of Claims 1 to 3, **characterised in that**
the additional carrier (11) is attached to the carrier (1) with the aid of a swivelling guide, in particular a parallelogram-type swivelling guide.

6. Chop and mitre-box saw according to one of Claims 1 to 5, **characterised in that**
the additional carrier (11) is attached to the carrier (1) in a removable manner.

## Revendications

1. Scie circulaire et à onglet,
comportant un support (1), qui constitue une surface d'appui (2) de pièce d'usinage ainsi qu'une fixation (3) attachée au support (1) pour un outil de sciage (4) définissant une direction d'un trait de scie, disposé au-dessus de la surface d'appui (2) de pièce d'usinage, avec une butée d'appui (6), pour une pièce d'usinage (7), fixée au support (1), dans une position médiane de l'outil de sciage (4), et s'étendant transversalement par rapport à la direction du trait de scie, sur la surface d'appui (2) de pièce d'usinage,
dans laquelle la surface d'appui (2) de la pièce d'usinage présente, dans la direction du trait de scie, lorsque l'outil de sciage (4) se trouve dans son positionnement de base, une certaine profondeur et dans la direction transversale par rapport à la direction du trait de scie, une certaine largeur,
lorsque l'outil de sciage (4) se trouve dans son positionnement de base,
dans laquelle le support (1), est pourvu, au moins d'un côté, d'une surface supplémentaire (10) formant un support complémentaire (11), grâce auquel, la profondeur et/ou la largeur utile pour le maintien d'une pièce d'usinage (7),
peuvent être agrandies,
dans laquelle la surface supplémentaire (10) fixée du support complémentaire (11) du support (1), est réglable entre une position de base proche du support (1) et une position distante éventuellement plus éloignée, et
dans laquelle la surface supplémentaire (10) se trouve dans la position de base, pour une certaine partie, en arrière de la ligne transversale définie par la butée d'appui (6) de la pièce d'usinage,
**caractérisée en ce que**,
la surface supplémentaire (10) se trouve, dans sa position de base, pour une part importante derrière la ligne transversale définie par la butée d'appui (6) et dans la position distante, bien d'avantage ou complètement devant la ligne transversale, et
que le support complémentaire (11) est attaché au support (1) de telle manière qu'il est réglable de sa position de base vers sa position distante, par un déplacement orienté en oblique, vers l'extérieur et vers l'avant, de la butée d'appui (6).

2. Scie circulaire et à onglet, selon la revendication 1, **caractérisée en ce que** la part importante de la surface supplémentaire (10) comprend au moins 25%, de préférence 30% à 50% de la surface (10).

3. Scie circulaire et à onglet, selon les revendications 1 ou 2, **caractérisée en ce que**, le support complémentaire (10) est solidaire du côté latéral du support (1).

4. Scie circulaire et à onglet selon l'une des revendications 1 à 3, **caractérisée en ce que** le support complémentaire (11) est fixé au support (1) au moyen de tiges coulissantes.

5. Scie circulaire et à onglet selon l'une des revendications 1 à 3, **caractérisée en ce que** le support complémentaire (11) est fixé au support (1) au moyen d'un dispositif de guidage pivotant, en particulier un dispositif à parallélogramme.

6. Scie circulaire et à onglet selon l'une des revendications 1 à 5, **caractérisée en ce que** le support complémentaire (11) est fixé au support (1) de façon amovible.
